# EUROPÄISCHE PATENTSCHRIFT

(11) **EP 2 514 658 B1**
(45) Veröffentlichungstag und Bekanntmachung des Hinweises auf die Patenterteilung: **16.09.2015**
(21) Anmeldenummer: 12162537.0
(22) Anmeldetag: 30.03.2012
(51) Int. Cl.: B62H 5/14, G07C 9/00

(54) **Verriegelungssystem**
Locking system
Système de verrouillage

(30) Priorität: 19.04.2011 DE 102011018185
(43) Veröffentlichungstag der Anmeldung: 24.10.2012
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A2- 1 818 246
- CH-B1- 698 545
- DE-A1-102007 042 847
- DE-A1-102007 058 481
- DE-B4- 10 207 630
- DE-C1- 19 854 879
- JP-A- 2001 182 410
- US-A1- 2004 113 819
- US-A1- 2010 156 818

## Beschreibung

Die vorliegende Erfindung betrifft ein Verriegelungssystem mit einem Schloss, insbesondere einem Rahmenschloss für ein Zweirad, und mit einer Fernsteuerungseinheit, wobei das Schloss einen Riegel, einen elektrischen oder elektromagnetischen Riegelaktuator zum Betätigen des Riegels, eine Steuerschaltung zum Steuern des Riegelaktuators und einen mit der Steuerschaltung gekoppelten Fernsteuerungsempfänger aufweist, und wobei die Fernsteuerungseinheit einen Fernsteuerungssender zum Aussenden eines Fernsteuersignals für das Schloss aufweist.

Ein derartiges Verriegelungssystem ist beispielsweise in dem nächstliegenden Stand der TechnikEP 1 818 246 A2 offenbart. Es umfasst ein vollautomatisches Rahmenschloss, bei dem sowohl das Öffnen als auch das Schließen des Riegels nach Empfang entsprechender Fernsteuersignale elektromechanisch durch den Riegelaktuator durchgeführt wird. Der Riegelaktuator umfasst bei diesem Rahmenschloss neben einem Elektromotor zum Betätigen des Riegels einen mittels eines Hubmagneten verstellbaren Sicherungsstift, welcher den Riegel in seiner Schließstellung gegen ein unbefugtes Öffnen sichert.

Neben Verriegelungssystemen mit vollautomatischen Rahmenschlössern sind auch Verriegelungssysteme mit halbautomatischen Rahmenschlössern bekannt, zum Beispiel aus EP 1 760 232 B1. Hierbei wird der Riegel manuell gegen die Kraft einer Feder in die Schließstellung verstellt und in dieser durch den Riegelaktuator blockiert. Ein entsprechendes Fernsteuersignal bewirkt eine Freigabe durch den Riegelaktuator, so dass die vorgespannte Feder den Riegel in seine Öffnungsstellung verstellt.

Gattungsgemäße Verriegelungssysteme mit einem Türschloss sind unter anderem in EP 0 737 789 B1, DE 102 07 630 B4, DE 198 54 879 C1, DE 10 2004 021 704 B3 und DE 20 2004 020 588 U1 offenbart.

Aus US 2004/0 113 819 A1 ist ein Verfahren bekannt, bei dem ein Sicherheitscode mithilfe eines Touch-Screens eingegeben wird.

Bei Verriegelungssystemen für Zweiradschlösser besteht die Problematik, dass ein versehentliches Abschließen während der Fahrt verhindert werden muss. Die Gefahr einer versehentlichen Betätigung besteht beispielsweise dann, wenn der Benutzer die Fernsteuerungseinheit in einer Hosentasche mit sich führt und dabei ungewollt ein Fernsteuersignal zur Betätigung des Schlosses ausgelöst wird. Zur Lösung dieses Problems schlägt EP 1 818 246 A2 vor, an der Fernsteuerungseinheit bzw. dem Sender zusätzlich zu dem eigentlichen Betätigungselement einen seitlich angeordneten Taster vorzusehen, um dadurch die Gefahr eines versehentlichen Verriegelns während der Fahrt zu verhindern. Dadurch vermindert sich jedoch der Bedienungskomfort und es besteht immer noch eine Restgefahr, dass beide Betätigungselemente versehentlich niedergedrückt werden.

Die Problematik der ungewollten Betätigung besteht aber grundsätzlich auch bei Verriegelungssystemen mit anderen Arten von Schlössern, beispielsweise bei fernbedienbaren Kraftfahrzeugschlössern oder Haus-, Wohnungs-, und Ziminertürschlössern. Bei einer ungewollten Betätigung besteht hier zwar keine unmittelbare Unfallgefahr, jedoch wird die Sicherheit des Verriegelungssystems beeinträchtigt, da eine versehentliche Betätigung der Fernsteuerungseinheit zu einem ungewollten Entriegeln des Schlosses führen kann.

Es ist daher die Aufgabe der Erfindung, ein Verriegelungssystem der eingangs genannten Art zu schaffen, das einfach zu betätigen ist und dabei zugleich einen zuverlässigen Schutz vor einer unbeabsichtigten Betätigung gewährleistet.

Die Lösung der Aufgabe erfolgt durch die Merkmale des Anspruchs 1. Erfindungsgemäß ist vorgesehen, dass die Fernsteuerungseinheit einen flächigen Berührungssensor und eine mit dem Berührungssensor gekoppelte Auswerte- und Steuerschaltung aufweist, die dazu ausgebildet ist, wenigstens ein vorbestimmtes Muster einer an dem Berührungssensor ausgeführten Bewegung zu erkennen und im Falle der Erkennung des vorbestimmten Bewegungsmusters den Fernsteuerungssender zum Aussenden eines zugeordneten Fernsteuersignals anzusteuern. Durch die Auswertung von vorbestimmten Bewegungsmustern, die ein Benutzer zum Beispiel mit Hilfe eines Fingers erzeugt, wird eine unbeabsichtigte Betätigung weitgehend ausgeschlossen. Das vorbestimmte Bewegungsmuster kann derart gewählt werden, dass eine dem vorbestimmten Muster entsprechende, bewusst vom Benutzer vorzunehmende Bewegungshandlung erforderlich ist, die keine oder nur eine sehr geringe Ähnlichkeit mit zufälligen Bewegungen aufweist, wie sie beim Tragen der Fernsteuerungseinheit in einer Hosentasche oder dergleichen auftreten können. Zudem kann bei entsprechender Auswahl eines geeigneten Berührungssensors, insbesondere eines kapazitiven Sensors, festgestellt werden, ob der Berührungssensor tatsächlich mit der Haut eines Fingers in Berührung steht, so dass eine zufällige Betätigung, etwa durch Reiben an dem Textilstoff einer Tasche, noch zuverlässiger ausgeschlossen werden kann.

Als Kriterien, die bei der Auswertung des Bewegungsmusters berücksichtigt werden, kommen beispielsweise der Anfangs- und/oder Endpunkt der Bewegung auf dem Berührungssensor sowie deren Richtung, Geschwindigkeit und/oder Dauer in Frage. Ferner kann auch die Anpresskraft auf den Berührungssensor, die beispielsweise durch einen Finger des Benutzers ausgeübt wird, ausgewertet werden.

Allgemein ausgedrückt, kann das Bewegungsmuster räumliche oder zeitliche Kriterien sowie eine Kombination aus räumlichen und zeitlichen Kriterien umfassen. Der Riegelaktuator kann sowohl elektromotorische als auch elektromagnetische Mittel, aber auch elektrische Antriebsmittel wie Piezoaktuatoren oder Formgedächtnislegierungen umfassen. Der Riegel kann direkt angetrieben sein oder seine Bewegung nach Freigabe durch den Riegelaktuator aufgrund der in einem mechanischen Energiespeicher, beispielsweise Federspeicher, gespeicherten Energie durchführen.

Das Fernsteuersignal wird vorzugsweise drahtlos übermittelt, beispielsweise mittels Funkwellen oder Infrarotwellen. Es enthält vorzugsweise ein Identifizierungssignal, das eine Zuordnung des Fernsteuerungssenders der Fernsteuerungseinheit zu dem Fernsteuerungsempfänger des Schlosses ermöglicht, und einen Steuerbefehl, welcher eine bestimmte Betätigung des Riegels kodiert.

Bei dem Berührungssensor kann es sich um einen kapazitiven, resistiven oder induktiven Sensor handeln. Es sind jedoch auch Berührungssensoren einsetzbar, die eine Fingerposition optisch, beispielsweise mittels fotosensitiver Elemente ermitteln, insbesondere mit Hilfe von Triangulation.

Gemäß einer bevorzugten Ausführungsform der Erfindung ist die Auswerte- und Steuerschaltung der Fernsteuerungseinheit dazu ausgebildet, ein vorbestimmtes geradliniges Muster einer an dem Berührungssensor ausgeführten Bewegung zu erkennen. Dabei kann es sich beispielsweise um eine Art Wischbewegung über die berührungsempfindliche Fläche des Berührungssensors handeln. Es ist weitgehend ausgeschlossen, dass eine einer solchen Wischbewegung entsprechende Druckbeaufschlagung auf zufällige Weise, etwa während des Aufbewahrens der Fernsteuerungseinheit in einer Tasche, erzeugt wird.

Bevorzugt weist der Berührungssensor eine längliche, rechteckige, berührungsempfindliche Fläche auf. Ein derartiger Berührungssensor eignet sich insbesondere zur Erkennung von solchen Bewegungsmustern, die der vorstehend erläuterten Wischbewegung entsprechen.

Vorzugsweise weist der Berührungssensor eine lineare Anordnung von mehreren diskreten, berührungsempfindlichen Elementen auf. Es können zum Beispiel drei, vier oder acht solcher berührungsempfindlichen Elemente vorgesehen werden. In der Auswerte- und Steuerschaltung können beispielsweise die Reihenfolge und der zeitliche Abstand der Betätigung der einzelnen Elemente ausgewertet werden. Ein solcher Berührungssensor lässt sich einfach und kostengünstig herstellen und ist auch hinsichtlich des benötigten Schaltungsaufwands bei der Auswertung vorteilhaft.

Gemäß der Erfindung ist der Berührungssensor ohne Bildanzeigeeinrichtung ausgebildet. Es handelt sich also nicht um einen sogenannten Touch-Screen.

Bevorzugt ist die Auswerte- und Steuerschaltung der Fernsteuerungseinheit dazu ausgebildet, eine Abfolge von mehreren vorbestimmten Bewegungsmustern innerhalb eines vorbestimmten Zeitintervalls zu erkennen. Es müssen also mehrere gleichartige oder unterschiedliche Bewegungen gemäß der vorbestimmten Bewegungsmuster durchgeführt werden, um eine Betätigung des Riegels hervorzurufen. Dadurch verringert sich die Gefahr einer ungewollten Betätigung noch weiter. Die Bewegungsmuster können beispielsweise darin bestehen, dass die Bewegung zwischenzeitlich abgesetzt wird, beispielsweise eine Wischbewegung, die zweimal hintereinander von links nach rechts über den Berührungssensor verläuft. Es kann jedoch auch eine Bewegung ohne ein zwischenzeitliches Absetzen vorgesehen werden, beispielsweise eine Bewegung, die kontinuierlich von der linken zur rechten Seite des Berührungssensors und zurück nach links verläuft. Durch die Festlegung eines vorbestimmten Zeitintervalls wird ausgeschlossen, das etwaige Bewegungsmuster, die zu schnell oder zu langsam durchgeführt werden, berücksichtigt werden.

Es ist ferner bevorzugt, wenn die Auswerte- und Steuerschaltung der Fernsteuerungseinheit dazu ausgebildet ist, die Kraftbeaufschlagung des Berührungssensors während einer an dem Berührungssensor durchgeführten Bewegung auszuwerten. Diese Auswertung kann beispielsweise einen Vergleich mit einem unteren und/oder oberen Schwellenwert umfassen. Alternativ oder zusätzlich kann auch ein Vergleich der Kraftbeaufschlagung zu Beginn der Bewegung mit einer Kraftbeaufschlagung am Ende der Bewegung erfolgen.

Gemäß einer weiteren bevorzugten Ausführungsform ist die Auswerte- und Steuerschaltung der Fernsteuerungseinheit dazu ausgebildet, ein benutzerspezifisches Bewegungsmuster zu erfassen und zu speichern. Dabei ist ein Einlernen einer benutzerspezifischen Charakteristik möglich, welche insbesondere neben dem räumlichen Verlauf des Bewegungsmusters auch die Kraft und/oder den zeitlichen Ablauf der Bewegung umfasst. Um eine zuverlässige Erkennung des Bewegungsmusters zu gewährleisten, können Toleranzgrenzen für die Mustererkennung beispielsweise dadurch gesetzt werden, dass während des Einlernvorgangs das benutzerspezifische Bewegungsmuster mehrfach durchgeführt und erfasst wird. Die Verwendung eines benutzerspezifischen Bewegungsmusters stellt ein zusätzliches Sicherheitsmerkmal dar, das verhindert, dass das Schloss auf unbefugte Weise, etwa bei Verlust der Fernsteuerungseinheit, durch fremde Personen betätigt werden kann.

Gemäß einer weiteren vorteilhaften Ausführungsform ist das Schloss als ein Rahmenschloss für ein Zweirad ausgebildet, wobei der elektrisch betätigte Riegel als ein Drehbügel, ein Schwenkbügel, ein linear versetzbarer Bügel oder als eine Sperreinrichtung zum Sperren eines Drehbügels, Schwenkbügels oder linear versetzbaren Bügels ausgebildet ist.

Vorzugsweise umfasst das dem vorbestimmten Bewegungsmuster zugeordnete Fernsteuersignal einen Schließbefehl, wobei die Steuerschaltung des Schlosses dazu ausgebildet ist, bei Empfang des Fernsteuersignals über den Fernsteuerungsempfänger den Riegel zu einer Schließbewegung anzusteuern. Dies ist insbesondere bei den eingangs erwähnten Rahmenschlössern sinnvoll, da ein unbeabsichtigtes Schließen des Schlosses insbesondere während des Betriebs des Zweirads gefährlich ist und daher verhindert werden muss.

Gemäß einer weiteren vorteilhaften Ausführungsform ist das Schloss als ein Türschloss ausgebildet, wobei der elektrisch betätigte Riegel als ein linear versetzbarer Riegel oder als eine Sperreinrichtung zum Sperren einer Schlossfalle oder eines linear versetzbaren Riegels ausgebildet ist. Der Riegel oder die Sperreinrichtung können sowohl direkt, etwa durch einen im Türschloss integrierten Antrieb, als auch indirekt betätigt werden, beispielsweise bei einem konventionellen Einsteckschloss durch einen Antrieb, der mit einem im Einsteckschloss vorgesehenen Profilzylinder gekoppelt ist. Im Unterschied zu dem vorstehend erläuterten Fall, bei dem das Schloss ein Rahmenschloss für ein Zweirad ist, kann das dem vorbestimmten Bewegungsmuster zugeordnete Fernsteuersignal einen Öffnungsbefehl umfassen, bei dessen Empfang der Riegel zu einer Öffnungsbewegung angesteuert wird. Wie eingangs bereits erläutert wurde, besteht der wesentliche Vorteil der Erfindung darin, ein unbeabsichtigtes Öffnen oder Entriegeln des Türschlosses zu verhindern.

Bevorzugt ist es, wenn ein einem ersten vorbestimmten Bewegungsmuster zugeordnetes Fernsteuersignal einen Schließbefehl umfasst und ein einem zweiten vorbestimmten Bewegungsmuster zugeordnetes Fernsteuersignal einen Öffnungsbefehl umfasst, wobei die Steuerschaltung des Schlosses dazu ausgebildet ist, bei Empfang des ersten Fernsteuersignals über den Fernsteuerungsempfänger den Riegel zu einer Schließbewegung anzusteuern und bei Empfang des zweiten Fernsteuersignals über den Fernsteuerungsempfänger den Riegel zu einer Öffnungsbewegung anzusteuern. Beispielsweise kann der Schließbefehl durch eine zweimalige, von rechts nach links verlaufende Bewegung ausgelöst werden, während der Öffnungsbefehl durch eine zweimalige Bewegung von links nach rechts ausgelöst wird. Dadurch ist es ausreichend, nur einen Berührungssensor vorzusehen, welcher für die Auslösung sowohl des Schließbefehls als auch des Öffnungsbefehls verwendet werden kann.

Weitere vorteilhafte Ausführungsformen der Erfindung sind in den Unteransprüchen, der Beschreibung und den Zeichnungen angegeben.

Die Erfindung wird nachfolgend anhand eines Ausführungsbeispiels mit Bezug auf die Zeichnungen erläutert. Es zeigen:
- Fig. 1: eine schematische Darstellung eines erfindungsgemäßen Verriegelungssystems, und
- Fig. 2: das Verriegelungssystem von Fig. 1 in Verbindung mit einem Rahmenschloss eines Zweirades.

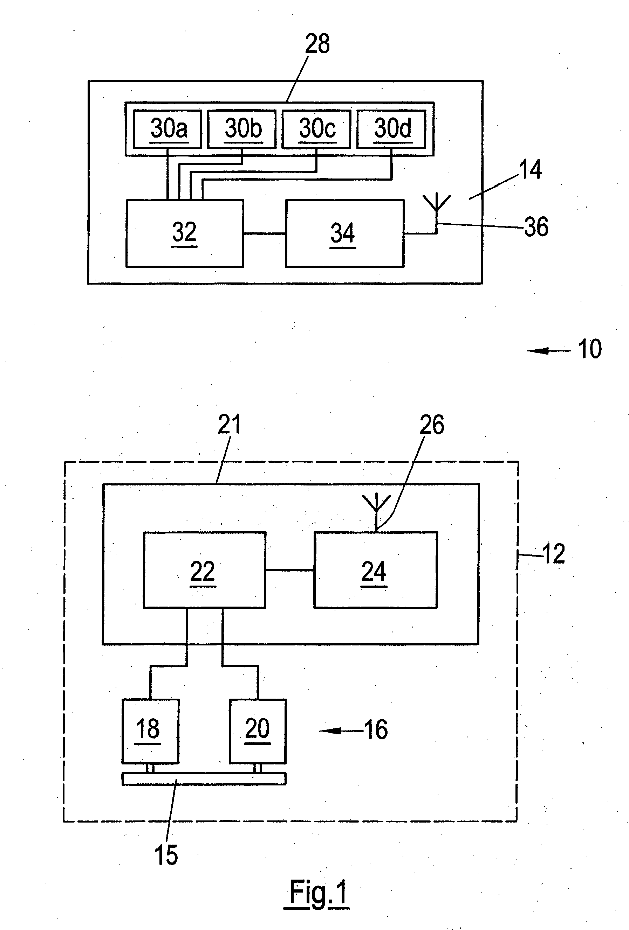

Gemäß Fig. 1 umfasst ein erfindungsgemäßes Verriegelungssystem ein Schloss 12, beispielsweise ein Rahmenschloss eines Zweirades oder ein Türschloss, und eine Fernsteuerungseinheit 14 zur Fernbetätigung des Schlosses 12.

Das Schloss 12 umfasst einen Riegel 15, welcher mittels eines Riegelaktuators 16 zwischen einer Schließstellung und einer Öffnungsstellung verstellbar ist. Der Riegelaktuator 16 umfasst einen Elektromotor 18 zum Verstellen des Riegels 15 und einen Hubmagneten oder Solenoid 20, welcher über ein Sperr- oder Sicherungselement mit dem Riegel 15 zusammenwirkt, um den Riegel 15 zumindest in der Schließstellung, bevorzugt auch in der Öffnungsstellung, gegen ein Verstellen zu sichern. Die mechanischen Wirkverbindungen zwischen dem Riegel 15 und dem Elektromotor 18 bzw. dem Solenoid 20 sind durch Doppelstriche lediglich schematisch dargestellt.

Die Ansteuerung des Elektromotors 18 und des Solenoids 20 erfolgt durch eine Steuereinheit 21, welche eine Steuerschaltung 22 und einen damit verbundenen Fernsteuerungsempfänger 24 umfasst.

Der Fernsteuerungsempfänger 24 empfängt von der Fernsteuerungseinheit 14 in Form von Funkwellen ausgesendete Fernsteuersignale über eine Antenne 26 und übermittelt entsprechende Steuersignale an die Steuerschaltung 22. Die Steuerschaltung 22 beaufschlagt den Elektromotor 18 bzw. den Solenoid 20 entsprechend der über die Fernsteuersignale übermittelten Steuerbefehle.

Die Fernsteuerungseinheit 14 umfasst einen an ihrer Außenseite angeordneten länglichen Berührungssensor 28, welcher im vorliegenden Ausführungsbeispiel vier in Reihe angeordnete berührungsempfindliche Elemente 30a bis 30d aufweist. Bei dem Berührungssensor 28 kann es sich um einen kapazitiven, resistiven oder induktiven Berührungssensor handeln.

Die berührungsempfindlichen Elemente 30a bis 30d sind mit einer Auswerte- und Steuerschaltung 32 verbunden, welche dazu ausgebildet ist, ein oder mehrere vorbestimmte Muster einer an dem Berührungssensor 28 ausgeführten Bewegung zu erkennen und im Falle der Erkennung des vorbestimmten Bewegungsmusters ein dem Bewegungsmuster entsprechendes Fernsteuersignal mittels eines Fernsteuerungssenders 34 und einer damit gekoppelten Antenne 36 auszusenden.

Ein Fernsteuersignal, welches in der Steuerschaltung 22 einen Schließbefehl auslöst, kann beispielsweise dadurch erzeugt werden, dass der Berührungssensor 28 zweimal nacheinander von links nach rechts überstrichen wird. Bei einer derartigen Wischbewegung werden nacheinander die berührungsempfindlichen Elemente 30a, 30b, 30c und 30d durch einen Finger des Benutzers aktiviert und übermitteln entsprechende Signale an die Auswerte- und Steuerschaltung 32. Ein Öffnungsbefehl kann in der Steuerschaltung 22 beispielsweise dadurch ausgelöst werden, dass der Berührungssensor 28 zweimal in entgegengesetzter Richtung überstrichen wird, sodass jeweils nacheinander die berührungsempfindlichen Elemente 30d, 30c, 30b und 30a berührt werden.

Grundsätzlich können auch andere Bewegungsmuster zur Erzeugung von Steuerbefehlen verwendet werden. So ist es zum Beispiel möglich, als Erkennungsmuster eine Hin-Rück-Bewegung zu verwenden, welche zum Beispiel beim berührungsempfindlichen Element 30a beginnt und ohne abzusetzen zum berührungsempfindlichen Element 30d und von dort zurück zum berührungsempfindlichen Element 30a führt.

Weitere mögliche Bewegungsmuster können beispielsweise dadurch erzeugt werden, dass die einzelnen berührungsempfindlichen Elemente 30a bis 30d in unterschiedlicher Reihenfolge durch einen entsprechenden Fingerdruck aktiviert werden.

Bei der Bewegungsmustererkennung kann auch der Zeitabstand berücksichtigt werden, mit dem die verschiedenen berührungsempfindlichen Elemente 30a bis 30d bei einer Wischbewegung aktiviert werden. So könnte zum Beispiel der Schließbefehl einer schnellen Wischbewegung zugeordnet werden, während das Auslösen des Öffnungsbefehls eine langsame Wischbewegung erfordert.

Gemäß einer Abwandlung kann auch ein Berührungssensor vorgesehen werden, der eine zweidimensionale Anordnung von berührungsempfindliche Elementen aufweist.

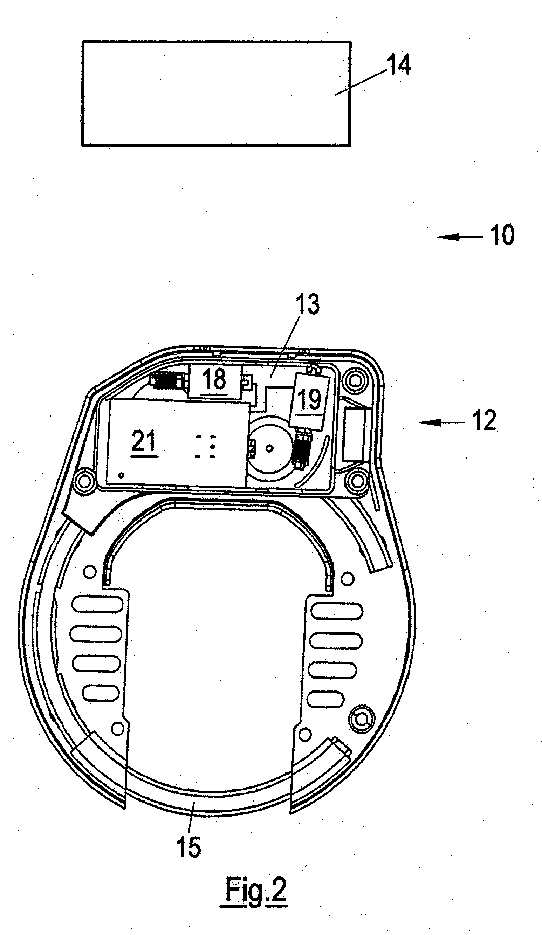

Mit Bezug auf Fig. 2 wird nachfolgend ein erfindungsgemäßes Verriegelungssystem 10 beschrieben, welches grundsätzlich dem Verriegelungssystem 10 von Fig. 1 entspricht, sodass für gleiche Komponenten dieselben Bezugszeichen verwendet werden. Das Verriegelungssystem 10 von Fig. 2 umfasst eine Fernsteuerungseinheit 14, die identisch mit der Fernsteuerungseinheit 14 von Fig. 1 ist. Es umfasst ferner ein Schloss 12, welches als Drehbügelschloss für ein Zweirad ausgebildet ist und einen als Drehbügel ausgebildeten Riegel 15 aufweist, der zwischen einer Schließstellung und einer Öffnungsstellung verdrehbar ist.

Das Verdrehen des Riegels 15 erfolgt mittels eines Elektromotors 18, der über eine Steuereinheit 21 angesteuert wird, wobei die Steuereinheit 21 in Aufbau und Funktion der Steuereinheit 21 von Fig. 1 entspricht. Weiterhin ist ein weiterer Elektromotor 19 vorgesehen, welcher ein nicht dargestelltes Sicherungselement antreibt, welches in seiner Sicherungsstellung in eine am Umfang des Riegels 15 vorgesehene Kerbe eingreift und so ein gewaltsames Verstellen des Riegels 15 verhindert. Die Elektromotoren 18, 19 sowie die Steuereinheit 21 sind in einem Gehäuse 13 des Schlosses 12 integriert.

### Bezugszeichenliste

- 10: Verriegelungssystem
- 12: Schloss
- 13: Gehäuse
- 14: Fernsteuerungseinheit
- 15: Riegel
- 16: Riegelaktuator
- 18, 19: Elektromotor
- 20: Solenoid
- 21: Steuereinheit
- 22: Steuerschaltung
- 24: Fernsteuerungsempfänger
- 26: Antenne
- 28: Berührungssensor
- 30a-30d: berührungsempfindliches Element
- 32: Auswerte- und Steuerschaltung
- 34: Fernsteuerungssender
- 36: Antenne

## Patentansprüche

1. Verriegelungssystem mit einem Schloss (12) und mit einer Fernsteuerungseinheit (14), wobei das Schloss (12) einen Riegel (15), einen elektrischen oder elektromagnetischen Riegelaktuator (16) zum Betätigen des Riegels (15), eine Steuerschaltung (22) zum Steuern des Riegelaktuators (16) und einen mit der Steuerschaltung (22) gekoppelten Fernsteuerungsempfänger (24) aufweist, und wobei die Fernsteuerungseinheit (14) einen Fernsteuerungssender (34) zum Aussenden eines Fernsteuersignals für das Schloss (12) aufweist,
**dadurch gekennzeichnet,**
**dass** die Fernsteuerungseinheit (14) einen flächigen Berührungssensor (28) und eine mit dem Berührungssensor (28) gekoppelte Auswerte- und Steuerschaltung (32) aufweist, die dazu ausgebildet ist, wenigstens ein vorbestimmtes Muster einer an dem Berührungssensor (28) ausgeführten Bewegung zu erkennen und im Falle der Erkennung des vorbestimmten Bewegungsmusters den Fernsteuerungssender (34) zum Aussenden eines zugeordneten Fernsteuersignals anzusteuern,
wobei der Berührungssensor (28) ohne Bildanzeigeeinrichtung ausgebildet ist.

2. Verriegelungssystem nach Anspruch 1,
wobei die Auswerte- und Steuerschaltung (32) der Fernsteuerungseinheit (14) dazu ausgebildet ist, ein vorbestimmtes geradliniges Muster einer an dem Berührungssensor (28) ausgeführten Bewegung zu erkennen.

3. Verriegelungssystem nach Anspruch 1 öder 2,
wobei der Berührungssensor (28) eine längliche rechteckige berührungsempfindliche Fläche aufweist.

4. Verriegelungssystem nach einem der vorhergehenden Ansprüche,
wobei der Berührungssensor (28) eine lineare oder zweidimensionale Anordnung von mehreren diskreten berührungsempfindlichen Elementen (30a-30d) aufweist.

5. Verriegelungssystem nach einem der vorhergehenden Ansprüche,
wobei die Auswerte- und Steuerschaltung (32) der Fernsteuerungseinheit (14) dazu ausgebildet ist, eine Abfolge von mehreren vorbestimmten Bewegungsmustern innerhalb eines vorbestimmten Zeitintervalls zu erkennen.

6. Verriegelungssystem nach einem der vorhergehenden Ansprüche,
wobei die Auswerte- und Steuerschaltung (32) der Fernsteuerungseinheit (14) dazu ausgebildet ist, die Kraftbeaufschlagung des Berührungssensors (28) während einer an dem Berührungssensor (28) ausgeführten Bewegung auszuwerten.

7. Verriegelungssystem nach einem der vorhergehenden Ansprüche,
wobei die Auswerte- und Steuerschaltung (32) der Fernsteuerungseinheit (14) dazu ausgebildet ist, ein benutzerspezifisches Bewegungsmuster zu erfassen und zu speichern.

8. Verriegelungssystem nach einem der vorhergehenden Ansprüche,
wobei das Schloss (12) als ein Rahmenschloss für ein Zweirad ausgebildet ist, wobei der elektrisch betätigte Riegel (15) als ein Drehbügel, ein Schwenkbügel, ein linear versetzbarer Bügel oder als eine Sperreinrichtung zum Sperren eines Drehbügels, Schwenkbügels oder linear versetzbaren Bügels ausgebildet ist.

9. Verriegelungssystem nach einem der Ansprüche 1 bis 7,
wobei das Schloss (12) als ein Türschloss ausgebildet ist, wobei der elektrisch betätigte Riegel (15) als ein linear versetzbarer Riegel oder als eine Sperreinrichtung zum Sperren einer Schlossfalle oder eines linear versetzbaren Riegels ausgebildet ist.

## Claims

1. A locking system having a lock (12) and having a remote control unit (14), wherein the lock (12) has a latch (15), an electric or electromagnetic latch actuator (16) for actuating the latch (15), a control circuit (22) for controlling the latch actuator (16) and a remote control receiver (24) coupled to the control circuit (22); and wherein the remote control unit (14) has a remote control transmitter (34) for transmitting a remote control signal for the lock (12),
**characterised in that**
the remote control unit (14) has an areal touch sensor (28) and an evaluation and control circuit (32) which is coupled to the touch sensor (28) and which is designed to recognise at least one predefined pattern of a movement carried out at the touch sensor (28) and, in the event of a recognition of the predefined movement pattern, to control the remote control transmitter (34) to transmit an associated remote control signal,
wherein the touch sensor (28) is designed without an image display device.

2. A locking system in accordance with claim 1,
wherein the evaluation and control circuit (32) of the remote control unit (14) is designed to recognise a predefined straight line pattern of a movement carried out at the touch sensor (28).

3. A locking system in accordance with claim 1 or claim 2,
wherein the touch sensor (28) has an elongate rectangular contact-sensitive surface.

4. A locking system in accordance with any one of the preceding claims,
wherein the touch sensor (28) has a linear or two-dimensional arrangement of a plurality of discrete contact-sensitive elements (30a-30d).

5. A locking system in accordance with any one of the preceding claims,
wherein the evaluation and control circuit (32) of the remote control unit (14) is designed to recognise a sequence of a plurality of predefined movement patterns within a predefined time interval.

6. A locking system in accordance with any one of the preceding claims,
wherein the evaluation and control circuit (32) of the remote control unit (14) is designed to evaluate the force exertion on the touch sensor (28) during a movement carried out at the touch sensor (28).

7. A locking system in accordance with any one of the preceding claims,
wherein the evaluation and control circuit (32) of the remote control unit (14) is designed to detect and to store a user specific movement pattern.

8. A locking system in accordance with any one of the preceding claims,
wherein the lock (12) is designed as a frame lock for a two-wheeler, with the electrically actuated latch (15) being designed as a rotary hoop, a pivot hoop, a linearly displaceable hoop or as a blocking device for blocking a rotary hoop, a pivot hoop or a linearly displaceable hoop.

9. A locking system in accordance with any one of the claims 1 to 7,
wherein the lock (12) is made as a door lock, with the electrically actuated latch (15) being designed as a linearly displaceable latch or as a blocking device for blocking a latchbolt or a linearly displaceable latch.

## Revendications

1. Système de verrouillage comprenant un cadenas (12) et une unité de télécommande (14), dans lequel le cadenas (12) comprend un verrou (15), un actionneur de verrou (16) électrique ou électromagnétique pour actionner le verrou (15), un circuit de commande (22) pour commander l'actionneur de verrou (16) et un récepteur de télécommande (24) couplé avec le circuit de commande (22), et dans lequel l'unité de télécommande (14) comprend un émetteur de télécommande (34) pour émettre un signal de télécommande pour le cadenas (12),
**caractérisé en ce que**
l'unité de télécommande (14) comprend un capteur tactile surfacique (28) et un circuit d'évaluation et de commande (32) couplé au capteur tactile (28), qui est réalisé pour reconnaître au moins un motif prédéterminé d'un mouvement exécuté sur le capteur tactile (28) et, dans le cas où le motif de déplacement prédéterminé est reconnu, pour piloter l'émetteur de télécommande (34) pour émettre un signal de télécommande associé,
dans lequel le capteur tactile (28) est réalisé sans dispositif d'affichage d'images.

2. Système de verrouillage selon la revendication 1,
dans lequel le circuit d'évaluation et de commande (32) de l'unité de télécommande (14) est réalisé pour reconnaître un motif rectiligne prédéterminé d'un mouvement exécuté sur le capteur tactile (28).

3. Système de verrouillage selon la revendication 1 ou 2,
dans lequel le capteur tactile (28) comporte une surface sensible au toucher allongée et rectangulaire.

4. Système de verrouillage selon l'une des revendications précédentes,
dans lequel le capteur tactile (28) comprend un agencement linéaire ou bidimensionnel de plusieurs éléments sensibles au toucher (30a-30d) discrets.

5. Système de verrouillage selon l'une des revendications précédentes,
dans lequel le circuit d'évaluation et de commande (32) de l'unité de télécommande (14) est réalisé pour reconnaître une succession de plusieurs motifs de déplacement prédéterminés à l'intérieur d'un intervalle temporel prédéterminé.

6. Système de verrouillage selon l'une des revendications précédentes,
dans lequel le circuit d'évaluation et de commande (32) de l'unité de télécommande (14) est réalisé pour évaluer la sollicitation en force du capteur tactile (28) pendant un mouvement exécuté sur le capteur tactile (28).

7. Système de verrouillage selon l'une des revendications précédentes,
dans lequel le circuit d'évaluation et de commande (32) de l'unité de télécommande (14) est réalisé pour saisir et mémoriser un motif de déplacement spécifique à l'utilisateur.

8. Système de verrouillage selon l'une des revendications précédentes,
dans lequel le cadenas (12) est réalisé à la manière d'un cadenas de cadre pour un deux-roues, dans lequel le verrou à actionnement électrique (15) est réalisé comme un arceau rotatif, un arceau pivotant, un arceau à déplacement linéaire ou d'un dispositif de blocage pour bloquer un arceau rotatif, un arceau pivotant ou un arceau à déplacement linéaire.

9. Système de verrouillage selon l'une des revendications 1 à 7,
dans lequel le cadenas (12) est réalisé sous forme d'une serrure de porte, dans lequel le verrou à actionnement électrique (15) est réalisé comme un verrou à déplacement linéaire ou comme un moyen de blocage pour bloquer un pêne de serrure ou un verrou à déplacement linéaire.
